# EUROPEAN PATENT APPLICATION

(11) **EP 4 700 234 A1**
(43) Date of publication of application: **25.02.2026**
(21) Application number: 24195097.1
(22) Date of filing: 19.08.2024
(51) Int. Cl.: F03D 7/02

(54) **WIND TURBINE, CONTROL SYSTEM AND METHOD FOR OPERATING A WIND TURBINE DURING IDLING**

(71) Applicant: Siemens Gamesa Renewable Energy A/S, 7330 Brande (DK)
(72) Inventor: Hawkins, Samuel, 7100 Vejle (DK); Toft, Henrik Stensgaard, 7100 Vejle (DK)
(74) Representative: SGRE-Association

(57) **Abstract**

A wind turbine, control system and method for operating a wind turbine during idling, the method comprising establishing two or more idling modes, the two or more idling modes including a first idling mode and a second idling mode, wherein the second idling mode comprises operating a wind rotor of the wind turbine at a higher rotational velocity than the first idling mode, determining an idling mode from the two or more idling modes, based at least in part on one or more fixed preference parameters and/or a measured parameter, the determination being related to an aerodynamic damping criterion and to an off-grid power generation requirement criterion, and selecting the idling mode resulting from the determination, when at least one of the criterions is fulfilled, and operating the wind turbine in said idling mode.

## Description

### FIELD OF THE INVENTION

The present invention relates to the field of wind turbine control, in particular a method and a control system for operating a wind turbine during idling. The present invention is further related to a wind turbine.

### BACKGROUND OF THE INVENTION

According to the state of the art, an idling wind turbine is generally characterized as a wind turbine that is not producing power for the grid or an external network but remains free to rotate. For horizontal axis wind turbines, the rotational speed of the wind turbine while idling is determined by the position of the rotor blades and the orientation (yaw) of the rotor relative to the wind direction.

Some wind turbines may be capable of producing power while idling for the wind turbine's own consumption ("self-sustained operation") or for the local wind farm's own consumption ("islanded operation"). This differs from normal idling in that the amount of power generated by the wind turbine is small relative to the amount that would be produced while in on-grid operation.

For offshore wind turbines, aerodynamic damping may counteract the motion of the wind turbine caused by ocean waves interacting with the wind turbine substructure. In doing so, aerodynamic damping can reduce the cyclic loading on the wind turbine support structure due to hydrodynamic loading and allow for lower cost designs and/or longer structural lifetimes.

Known control system and methods have a number of drawbacks. For instance, some offshore wind turbine foundation types see little to no benefit for their support structure from rotor idling at relatively high rotor speeds by design/default control systems. This is generally the case for jacket foundations, which are typically very stiff and which waves can easily pass through without inducing heavy loads. The same is true for some floating wind support structures which are generally stiff structures. On the contrary, idling at higher speeds involves a larger number of overall rotor rotations. This leads to higher cyclic loading on the rotor and nacelle of the wind turbine with no damping benefit to the support structure (tower and foundation) associated with this disadvantage.

Therefore, some of these wind turbines currently operate at a predefined idling rotational velocity or range of rotational velocities that are relatively high rotational speeds leading to higher rotor and nacelle loads, even if their support structures do not see significant benefit from the aerodynamic damping associated with the higher speed. In addition, this mode of control with a relatively high rotor velocity, which as aforementioned may be unsuitable for some types of offshore foundations, can be implemented as a fixed feature in the control system even if the wind turbine is not capable of operating in either an islanded mode or a self-sustained mode and/or if the foundation does not benefit from such higher velocities.

In addition, even when the wind turbine is capable of operating in these modes, it may be designed to operate at relatively high rotor speeds by default during idling mode, without having in consideration the aerodynamic damping requirement, which may be low for the supporting structure but high velocities might be harmful for the rotor blades and nacelle, and without distinguishing on operational parameters of either the an islanded or self-sustained mode.

Furthermore, wind turbines or wind farms that occasionally require and are capable of operating in either self-sustained or islanded modes should not always operate in a fixed, very slow speed or "passive" mode, as this is insufficient for electricity generation from the generator. In addition, operating at too low a speed may have lower loading for the rotor and the nacelle but may lead to higher cyclic loading on the tower and foundation due to the relative absence of aerodynamic damping to counteract wave loading and/or other causes of cyclic loading such as vortex shedding.

Hence, there may be an urgent need for a method for operating a wind turbine during idling, which do not suffer from at least one of the above drawbacks.

It is therefore a goal of the present invention to provide a method for operating said wind turbine capable of determining different aerodynamic damping criterion as a function of the structure characteristic (e.g. foundation type), dynamic loading and/or other criteria, in particular when intended to be operated in self-sustained operation or islanded operation mode generating electricity off-grid.

### SUMMARY OF THE INVENTION

This need may be met by the subject matter according to the independent claims. Advantageous embodiments of the present invention are described by the dependent claims. Features of different claim categories may be combined as appropriate to give further embodiments not described herein.

According to a first aspect of the invention, there is provided a method for operating a wind turbine during idling, the method comprising:
establishing two or more idling modes, the two or more idling modes including a first idling mode and a second idling mode, wherein the second idling mode comprises operating a wind rotor of the wind turbine at a higher rotational velocity than the first idling mode,
determining an idling mode from the two or more idling modes, based at least in part on one or more fixed preference parameters and/or a measured parameter, in particular the determination related to an aerodynamic damping criterion and/or an off-grid power generation requirement criterion, and
selecting the idling mode resulting from the determination, in particular when at least one of the criterions is fulfilled, and
operating the wind turbine in the selected idling mode.

For instance, the one or more fixed parameter or the measured parameter may contribute or be utilized as part of the aerodynamic damping criterion and/or the off-grid power generation mode criterion.

In an embodiment, the method integrates both an aerodynamic damping criterion and an off-grid power generation requirement criterion and may determine the idling mode based on fulfilling at least one thereof.

In some embodiments, the method first checks if either one of the criteria is fulfilled, and subsequently checks for the second for further action, if none is fulfilled, then the method is operated at idling with the turbine in a very slow rotational velocity without high aerodynamic damping and without power generation. Notwithstanding, the method may execute the above-mentioned steps in parallel and, for example, a cost function determines the selected idling mode.

In some embodiments, the method first checks the off-grid power generation requirement criterion and subsequently the aerodynamic damping criterion.

In some embodiments, the method first checks the aerodynamic damping criterion and subsequently the off-grid power generation requirement criterion.

This aspect of the invention is based on the idea that the wind turbine can adapt between various idling modes, each involving different rotor angular velocities, the selection/determination based on an aerodynamic damping criterion (such as the foundation type) and/or an off-grid power generation mode criterion (such as the capacity or requirement to operate in an islanded mode or self-sustained mode off grid but producing power). The off-grid power generation mode criterion may further comprise a power level demanded from the generator, or the actual mode required to be operated at, namely, distinguishing between an islanded mode or self-sustained mode.

This enables the wind turbine to operate flexibly, accommodating multiple requirements, specifically by adjusting to the aerodynamic damping needed to stabilize the support structures. Additionally, it further adapts to off-grid electricity generation needs, such as islanded or self-sustained modes requirements. Both criteria are evaluated to determine the optimal operating mode, choosing between at least two or at least three idling modes, each with different rotational speeds. This approach reduces the load on the support structures (tower and foundation) while optimizing off-grid power generation by setting the required rotational speeds only when necessary, thus avoiding unnecessary rotor loading, particularly when the foundation does not benefit from increased damping at higher velocities.

According to the present application, islanded mode refers to a state of operation where a wind turbine functions independently from the main electrical grid. In this mode, the system must generate and regulate its own power supply to meet local demand without relying on external grid support.

According to the present application, self-sustained power operational mode off-grid during idling describes a condition where the wind turbine continues to generate sufficient power to sustain its own essential operations and any connected loads while not actively contributing power to the main grid. This mode ensures that the turbine can maintain necessary functions, such as monitoring and control systems, even when disconnected from the grid.

In some embodiments, the method may further comprise generating electricity in the first idling mode and the second idling mode, in particular in either an islanded operational mode or a self-sustained operational mode. Optionally, the method may further comprise a third mode of operation with no electricity production.

According to an embodiment of the invention, the first idling mode may be a passive mode where the wind turbine does not produce electricity, and the second idling mode operates producing electricity, therefore the method having only two modes of operation.

In some embodiments, the method may further comprise establishing three idling modes for the wind turbine, wherein the three idling modes comprise:
a passive idling mode,
the first idling mode, and
the second idling mode.

In some embodiments, the passive idling mode may be operated such that the wind turbine does not produce electricity and rotates at very low rotational speeds (e.g., below 2 rpm).

In some embodiments, the first idling mode may be operated at higher velocities than the passive mode but lower than the second idling mode (e.g. between 2 rpm and 6 rpm).

In some embodiments, the second idling mode may be operated at higher velocities than the first idling mode (e.g., 6 to 10 rpm), such that it provides a higher aerodynamic damping than the second idling mode if required.

Notwithstanding, it must be noted that design velocities (or range) established/determine as suitable for aerodynamically damping the tower and foundation, are generally dependent on the rotor diameter of the actual wind turbine to be operated, so the rpm are given by way of example for a current offshore wind turbine according to the state of art sized and technology.

The rpm of each idling mode can be a design rotational velocity or a range of design rotational velocities wherein the second idling mode is intended to be operated at a higher velocity (or range) than the first idling mode and, optionally, if a passive idling mode is present, wherein the first idling mode is intended to be operated at a higher rotational velocity than the passive idling mode.

In short, the method establish/define at least two idling mode, in particular three idling modes to operate a wind turbine, each idling mode configured to be operated at different rotational velocities or rotational velocity ranges, and further determines the idling mode required in dependence on fixed preference parameters (such as the wind turbine foundation type or an off grid power generation criterion) and/or in dependence of measured parameters (such as tower top acceleration) to dynamically select and transition between these modes.

Therefore, this approach optimizes the wind turbine's operation during idle periods by balancing off grid power generation, structural loading, and/or aerodynamic damping based on the turbine's specific wind turbine characteristics and/or real-time conditions.

In some embodiments, the method may further comprise transitioning between idling modes based on a change of the measured parameter, in particular based on a threshold associated with the measured parameter. This dynamic adjustment allows for real-time optimization of turbine operation.

The measured parameter may comprise structural loading on a component of the wind turbine. This ensures that the turbine's operational mode is closely aligned with the actual physical stresses it experiences.

According to another embodiment, the structural loading may be based at least in part on acceleration data of the tower. This may be taken as a parameter for determining the appropriate idling mode, either alone or in combination with a further fixed parameter (such as the foundation type and/or a criterion associated with the capability to work in an islanded mode or selfsustained). The acceleration data may be taken from a tower top.

In an embodiment of the invention, the one or more fixed parameters may include a structural characteristic of the wind turbine, such that the fixed preference parameter sets a preference to operate the wind turbine in the first or the second idling mode based at least in part on said structural characteristic.

In some embodiments, the structural characteristic may comprise a foundation type of the wind turbine. For instance, a jacket foundation may be a preference fixed parameter for selecting the first idling mode, whereas a monopile foundation may be a fixed preference parameter for selecting the second idling mode.

In short, the step of determining the idling mode may comprise fulfilling an off-grid power generation mode criterion based on the capability of the wind turbine to operate for at least one of a self-sustained operation or an islanded operation, such that the second idling mode is selected when the capability is present.

In an embodiment, the method determines the idling mode in dependence on fixed preference parameters (such as the wind turbine foundation type and/or an off-grid power generation criterion) and/or in dependence of measured parameters (such as tower top acceleration) to dynamically select and transition between these modes. This dynamic selection and transition between modes may involves using fixed preference parameters as sequential or parallel decision-making steps, which are further validated with the measured parameters, such as tower top acceleration data.

Optionally, the primary control may rely on dynamically measured values, such as tower top acceleration, while secondary control can use fixed preferences. One or both (primary and secondary) may be use on a decision-making logic for determining an aerodynamic damping criterion. The decision-making logic may further comprise a loading threshold, a cost function or other equivalents included in an algorithm.

In some embodiments, the measured values and the fixed preference parameter are both related or utilized to establish an aerodynamic damping criterion which may comprise a cost function, a pondering, a threshold, or other equivalent metrics for determining an aerodynamic damping level required. The determination of the idling mode is then based on the established aerodynamic damping criterion.

Alternatively, the determination of the idling mode from the plurality of idling modes, can be based essentially from measured values.

In an embodiment, the determining of the idling mode from the two or more idling modes, in particular three idling modes, may be based at least in part on a lower aerodynamic damping criterion and on a higher aerodynamic damping criterion, such that when the higher aerodynamic damping criterion is fulfilled, the wind turbine is operated at the second idling mode and/or when the lower damping criterion is fulfilled, the wind turbine may be operated in the first idling mode.

Again, the aerodynamic damping criterion may be based in either one or both of the fixed parameters (such as foundation type which may require different aerodynamic damping levels) and measured values (such as acceleration at the tower top, in particular an incremental or rate of change of said acceleration). Combining both may render a more precise method capable of reducing the cyclic loading to an even larger extend.

In some embodiments, the off-grid power generation requirement criterion comprises an energy required and/or power metrics (such as minimum, average and maximum power required) for operating on either self-sustained operational mode or islanded operational mode. Thus, off-grid power generation requirement criterion may comprise a determination of the energy requirement of the components to be fed in off grid mode and may further comprise measured parameters such as power measurements and wind speed measurements to estimate the available power production to match a demand.

The determination of the idling mode may therefore be based at least in part on this off-grid power generation requirement criterion, for example, if the off-grid power generation criterion is fulfilled, then the wind turbine may be operated in an islanded operational mode at the second idling mode therefore operated at a higher rotational velocity and higher power production.

Nothwithanding in some embodiments, the determination of the idling mode may be based on both the aerodynamic damping criterion and the off-grid power generation requirement criterion, for example, by using a cost function, a pondering or a decision algorithm (among other possibilities). Alternately or in combination, It may be a subsequent check of condition fulfilling of the criterions.

In an embodiment, the determining of the idling mode from the two or the three idling modes, may be based at least in part on an lower and higher off-grid power generation requirement criterions.

For instance, if the higher off-grid power generation requirement criterion is fulfilled, the wind turbine may be operated at the second idling mode and/or if the lower off-grid power generation requirement criterion is fulfilled, the wind turbine may be operated in the first idling mode.

In some embodiments, the off-grid power generation criterions (low and high) and the aerodynamic damping criterions (e.g. lower and higher) are all taken into account for the determination of the idling mode to be operated, for example, by using a cost function or a suitable decision algorithm (among other possibilities).

In another embodiment, the step of determining the idling mode may comprise fulfilling an off-grid power generation requirement criterion based on the capability of the wind turbine to operate for at least one of a self-sustained operational mode or an islanded operational mode, such that the second idling mode is selected when the capability is present.

Therefore, in some embodiments, fulfilling the off-grid power generation requirement criterion may be based on a Boolean logic taken as a yes/no as a fixed preference parameter, this criterion may be taken alone or in combination with the aerodynamic damping criterion to determine the idling mode of operation from the two or more idling modes, in particular three idling modes.

Therefore, the approaches described in the above optimize the wind turbine's operation during idle periods by balancing off grid power generation, structural loading, and/or aerodynamic damping requirements to the support structure, based on the turbine's specific wind turbine characteristics such as the function type and/or real-time conditions.

According to a second aspect of the invention, a control system configured to implement the method according to any of the previous embodiments is provided.

More in particular, a control system for a wind turbine is provided, said control system configured to:
implement two or more idling modes, wherein the two or more idling modes include a first idling mode and a second idling mode, wherein the second idling mode comprises operating a wind rotor of the wind turbine at a higher rotational velocity than the first idling mode,
determine an idling mode from the two or more idling modes, based at least in part on one or more fixed preference parameters and/or a measured parameter, in particular the determination related to an aerodynamic damping criterion and/or an off-grid power generation requirement criterion, and
select the idling mode resulting from the determination, in particular when at least one of the criterions is fulfilled, and
operate the wind turbine in the selected idling mode.

In some embodiments, the control system may further comprise generating electricity in the first idling mode and/or the second idling mode, particularly in either an islanded operational mode or a self-sustained operational mode.

An advantage of the present invention is to enhance the operation of a wind turbine during idling, in particular for a wind turbine design to be operated on self-sustained or islanded operational mode.

In addition, an advantage of the second aspect, is enhancing the utility of the wind turbine with a control system capable of deciding between at least two modes of operation, in particular three, either based on a damping criterion (foundation type and/or tower top accelaration) and/or based on the off-grid power generation mode (e.g. islanded or self-sustained mode).

According to another embodiment, the first idling mode may be a passive idling mode where the wind turbine does not produce electricity, and the second idling mode is an active mode where the wind turbine produces electricity. This differentiation allows the control system to switch between power-producing and non-power-producing states based on operational needs such as an aerodynamic damping requirement and/or power production mode while off-grid (idling) requirement.

In another embodiment, the control system may be configured to implement three idling modes, including:
a passive idling mode with very low rotational speed where the wind turbine generator is not producing power.
the first idling mode with low/moderate-speed idling.
the second idling mode with high-speed idling.

This embodiment provides a broader range of operational flexibility to match an aerodynamic damping criterion for example a low damping (first idling mode) or high damping (second idling mode), and/or a fixed preference parameter/input based on a structural characteristic such as a foundation type.

This embodiment may also allow for a broader range of operational possibilities for operating in islanded or self-sustained mode, because the wind turbine may select between different power references, based on the demand but also on aerodynamic damping requirements.

In some embodiments, the control system is configured to transition between idling modes based on a change in the measured parameter, particularly based on a threshold associated with the measured parameter. This dynamic adjustment allows for real-time optimization of turbine operation.

The measured parameter used by the control system may comprise structural loading on a component of the wind turbine. This ensures that the turbine's operational mode is closely aligned with the actual physical stresses it experiences during idling.

In another embodiment, the structural loading may be based at least in part on acceleration data of the tower. This provides a precise metric for determining the appropriate idling mode and ensures accurate control of the wind turbine's operational state.

The control system may consider one or more fixed parameters, including a structural characteristic of the wind turbine, such that the fixed preference parameter sets a preference to operate the wind turbine in the first or the second idling mode based at least in part on said structural characteristic.

In an embodiment, the structural characteristic may comprise a foundation type of the wind turbine. For example, a jacket foundation may be a fixed preference parameter for selecting the first idling mode, whereas a monopile foundation may be a fixed preference parameter for selecting the second idling mode.

For instance, the fixed preference parameter may set an initial/default idling mode when the wind turbine is to be operated in idling mode. Other criterion (such as off-grid power generation or different aerodynamic damping levels required) may change this default idling mode in the determination step.

These advantages of the wind turbine system according to the second aspect of the invention may align with the previously mentioned benefits of the method for operating a wind turbine. Additionally, the advantageous features of the method can generally be integrated and implemented within the control system for operating the wind turbine, unless specified otherwise.

The control system for a wind turbine, as described in the above-mentioned embodiments, offers a robust and adaptable approach to managing idling modes, optimizing performance, and ensuring structural integrity while maximizing availability and annual energy production. The system's ability to dynamically adjust idling modes based on fixed and/or measured parameters allows for efficient and effective wind turbine operation during idling.

In a third aspect of the invention, a wind turbine comprising the control system according to any one of the above embodiments is provided.

More in particular, it is provided a wind turbine comprising a rotor assembly comprising a rotor assembly having at least two blades configured to capture wind energy, a rotor hub to which the blades are attached, a generator mechanically linked to the rotor hub, configured to convert mechanical energy into electrical energy, a nacelle housing the generator, a tower supporting the nacelle and the rotor assembly, a foundation anchoring the wind turbine to ground or seabed,
wherein the wind turbine comprises the control system according to any one of the embodiments described in the second aspect of the invention.

In a fourth aspect of the invention, it is provided a non-transitory computer-readable storage medium, the computer-readable storage medium including instructions that when executed by a computer, cause the computer to:
determine an idling mode from two or more idling modes, in particular from the three idling modes, the two or more idling modes including a first idling mode and a second idling mode, wherein in the second idling mode a wind rotor of a wind turbine is intended to be operated at a higher rotational velocity than the first idling mode, wherein the determination is based at least in part on one or more fixed preference parameters and/or a measured parameter, in particular wherein the determination is related to an aerodynamic damping criterion and/or an off-grid power generation requirement criterion, in particular further generating instructions for operating the wind turbine in the idling mode resulting from the determination.

It is noted that embodiments of the invention have been described with reference to different subject matters. Specifically, some embodiments have been described with method type claims, while others have been described with apparatus type claims. However, a person skilled in the art will understand from the above and the following description that, unless otherwise indicated, any combination of features from one type of subject matter with features from another type of subject matter, particularly combinations of features from method type claims and apparatus type claims, is also part of the disclosure of this document.

The aspects defined above, and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### BRIEF DESCRIPTION OF THE DRAWINGS

Embodiments of the invention are now described, by way of example only, with reference to the accompanying drawings, of which:
Figure 1 shows a flowchart describing the fundamental step of a method for operating a wind turbine during idling in accordance with one embodiment of the present invention.
Figure 2 Shows a method for operating a wind turbine during idling according to an embodiment of the present invention depicting a exemplary logic that may be implemented in a control system of a wind turbine.
Figures 3 Shows a method for operating a wind turbine during idling according to an embodiment of the present invention depicting yet another specific exemplary logic that may be implemented in a control system of a wind turbine.

### DESCRIPTION OF THE DRAWINGS

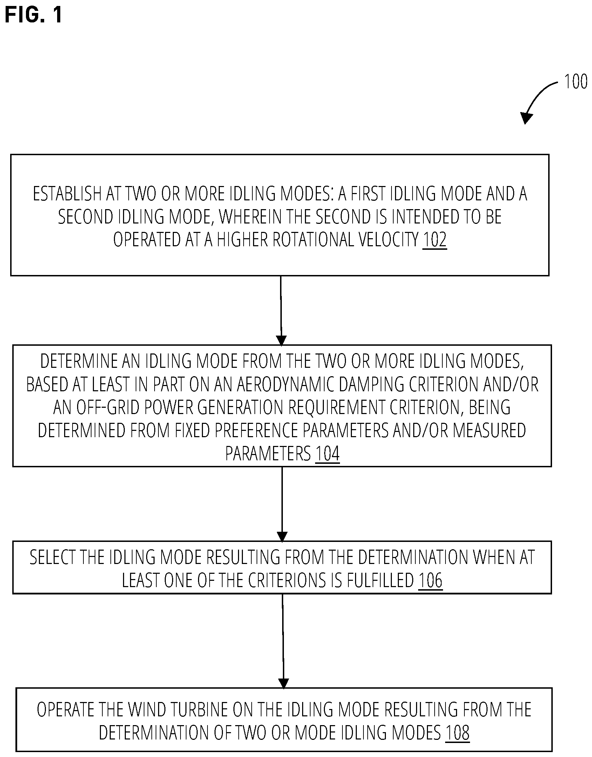

Figure 1 shows a flowchart depicting the fundamental steps of a method (100) for operating a wind turbine during idling according to an embodiment of the invention.

More specifically, the method (100) in step (102) establishes two or more idling modes, the two or more idling modes including a first idling mode and a second idling mode, wherein the second idling mode comprises operating a wind rotor of the wind turbine at a higher rotational velocity than the first idling mode.

Step (104) involves the determination of an idling mode from the two or more idling modes, based at least in part on one or more fixed preference parameters and/or a measured parameter.

In the embodiment depicted in Figure 1, the determination is related to an aerodynamic damping criterion and/or an off-grid power generation requirement criterion.

More in particular, the method (100) includes determining an idling mode from the two or more idling modes, based at least in part on an aerodynamic damping criterion and/or an off-grid power generation requirement criterion, said criterions being determined from fixed preference parameters and/or measured parameters.

In step (106), the method (100) includes selecting the idling mode resulting from the determination when at least one of the criterions is fulfilled resulting from the determination of Step (104).

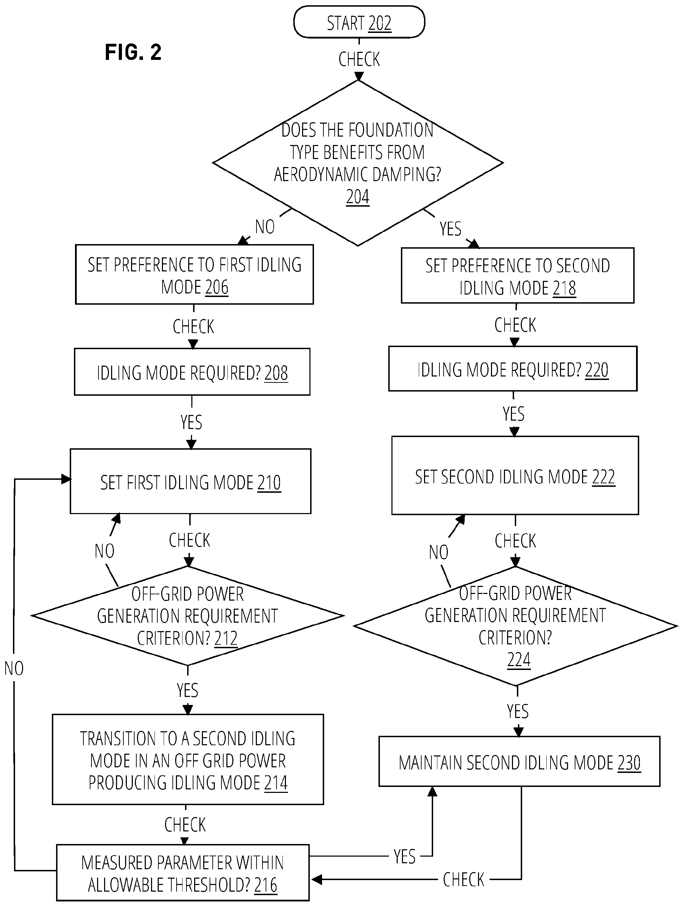

Figure 2 shows a flowchart illustrating an example of a method (200) for operating a wind turbine during idling.

Figure 2 illustrates an example method (200) for operating a wind turbine during idling according to yet another embodiment of the invention. More in particular, the method starts at step (202) and subsequently it must determine (or be inputted) if the foundation type is of the type requiring a high aerodynamic damping of the support structure, for example, a monopile foundation, or else, if the support structure does not require a high damping such as a jacket foundation.

If the outcome of step (204) determination is that no high damping is required from the foundation requirements (e.g. a jacket foundation or equivalent), then in step (206) the method may comprise setting a preference to operate at a first idling mode involving a lower rotational velocity.

In contrast, If the outcome of step (204) determination is that a high damping is required from the foundation requirements (monopile foundation or equivalent), then in step (218) it may set a preference to operate at a second idling mode involving a lower rotational velocity.

These preferences may be stored for later use depending on further parameters.

For example, in the preferred embodiment of Figure 2, if the wind turbine is to be operated at an idling mode, then it may set the preference idling mode stored such as in steps (208, 220) depending on the preference stored.

In an embodiment according to the first aspect of the invention, the first idling mode may be an idling mode with no electricity production intended to be operated when there is no self-sustained mode or islanded mode of operation. However, the method (200) of Figure 2 may comprise a passive mode (not shown) and the first idling mode may be a lower electricity generation mode.

Referring back to Figure 2, if the wind turbine is being operated at a first idling mode with a lower rotational velocity based on the best suited for the foundation type (e.g. jacket foundation with no electricity production requirement), and it is further required at step (212)to operate at a self-sustained mode or islanded mode, then the at step (214) the method comprises transitioning to a second idling mode of operation to operated in the required off-grid power producing mode at a higher rotational velocity.

In parallel, if the wind turbine is being operated at a second idling mode with a higher rotational velocity based on the best suited for the foundation type at step (222), and there is a requirement at step (224) to operate at a self-sustained mode or islanded mode, then the wind turbine is maintained at the second idling mode (see step 230). Notwithstanding, it will be apparent based on the teachings herein described, that a third passive mode of operation, intended to be operated at a lower rotational velocity, may be implemented in order to operate at an idling mode with no electricity production whereas the first and second idling mode may be two further modes intended to be operated during the self-sustained mode or islanded mode, said first and second idling mode determined/selected depending on requirements such as energy required, damping required, loads measured, etc.

Referring back to step (222) and (224), if the top acceleration is within an allowable vibration threshold (see step 226), then the wind turbine is operated at the second idling mode set as preference in step (220). Otherwise, if it surpassed the threshold of step (226) then the wind turbine may transition to first mode of operation with a lower rotational velocity (or to passive mode). In an embodiment, dependent on the acceleration measured or rate of acceleration, the wind turbine is transitioned to passive mode or to the first idling mode.

Although the example method (200) depicts a particular sequence of operations, the sequence may be altered without departing from the scope of the present disclosure. For example, some of the steps or operations depicted may be performed in parallel or in a different sequence that does not materially or substantially affect the function and advantages of the method (200).

It should also be noted that, in some alternative implementations, the functions noted in the step may occur out of the order noted in the figures. For example, two steps shown in succession may, in fact, be executed substantially concurrently, or the steps may sometimes be executed in the reverse order, depending upon the functionality involved. It will also be noted that each step of the block diagrams and/or flowchart illustration, and combinations of steps in the block diagrams and/or flowchart illustration, can be implemented by special purpose hardware-based systems which perform the specified functions or acts, or combinations of special purpose hardware and computer instructions.

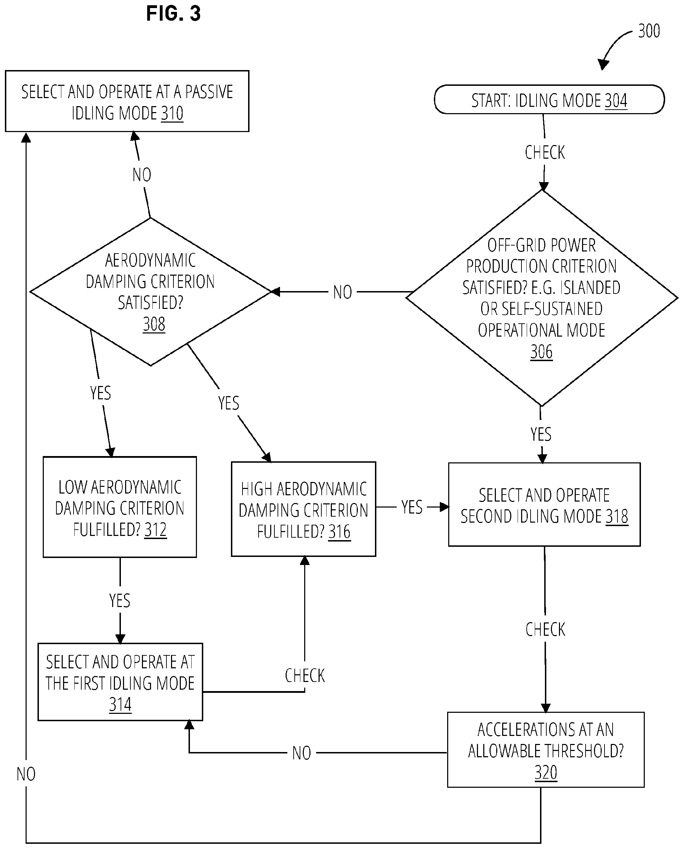

Figure 3 illustrates an example method (300) for operating a wind turbine during idling according to yet another embodiment of the invention.

The method (300) starts at a step (304), where the method starts with a requirement for an idling mode of operation of the wind turbine.

Next, at step (306), the method involves a step comprising checking an off-grid power production criterion. More in particular, step (306) involves checking whether the off-grid power production criterion is satisfied, for example, said criterion being a requirement to operate in an islanded or at a self-sustained operational mode. The requirement may be a power requirement such as a given power needed, for example 300 kW or 500 kW, or a Boolean criterion of checking if the capability is present or is not present (yes or no) based on either the wind turbine design or the wind farm requirement. In addition, a further step of checking if the current wind condition allows to match the power requirement at the islanded or self-sustained power operational mode.

In another embodiment, the off-grid power production criterion as defined in step (306), may involve distinguishing between an islanded mode or a self-sustained operational requirement.

Next, if the criterion is not fulfilled, the method (300) further comprises, at step (308), checking whether a damping criterion is satisfied. In a preferred embodiment, this may be checking a fixed preference parameter such as the foundation type (monopile foundation, jacket foundation, inter alia) or it may check data related to a damping required to the tower or the foundation type, such as acceleration data gathered at the top of the tower.

Please note that, in the embodiment depicted in Figure 3, first at step (306) the off-grid power production criterion is checked, and subsequently at step (308) the aerodynamic damping criterion is checked, but the order can be altered according to the present invention. In such an embodiment, for example, only if an aerodynamic damping criterion is satisfied then the wind turbine would operate in either an islanded or self-sustained mode.

Referring back to Figure 3, if none of the criterions is satisfied in steps (306) and (308), the method comprises selecting and operating the wind turbine at a passive idling mode with no power production as depicted in step (310).

In contrast, if an aerodynamic damping criterion is satisfied, meaning that some aerodynamic damping is convenient to damp the tower or the foundation, the method may further comprise distinguishing between a requirement based on a lower aerodynamic damping criterion (see step 312) or a higher aerodynamic damping criterion at step (316).

According to some examples, if the lower aerodynamic damping criterion is fulfilled the method includes selecting the first idling mode at step (314) and operating wind turbine at said first idling mode.

In step (318), a further checking is performed, namely, if the higher aerodynamic damping criterion is fulfilled the method (300) includes selecting and operating the wind turbine at the selected the second idling mode.

According to some examples, the method includes checking if the tower accelerations are within an allowable threshold at step (320). This dynamic approach could be combined either as a safety feature or with the previous step, for example included in the determination step (308).

Furthermore, the tower accelerations may be introduced as a cost function combined with the cyclic loading of the blades and the nacelle which loading may increase at higher rotational velocities while at the supporting structure decreases.

In other words, the tower acceleration data, may be utilized in any of the steps (308), (312) and (316) in combination with fixed preference parameter such as the foundation type.

It should be noted that, similar to Figure 2 depicting an exemplary way of carrying out the invention, the method (300) of Figure 3 depicts a particular sequence of steps, but the sequence may be altered without departing from the scope of the present disclosure. For example, some of the steps depicted may be performed in parallel or in a different sequence that does not materially affect the function of the method.

In addition, as will be appreciated, some embodiments of the present invention may be embodied as a method, system, or computer program product.

In an aspect of the invention, the method above may be a computer implemented method, for example configured to be read from a non-transitory computer-readable storage medium including instructions that, when executed by a computer or control system, cause the computer or control system to reproduce one or some of the steps of the methods above (100, 200, 300) .

Accordingly, the present invention may take the form of an entirely hardware embodiment, an entirely software embodiment (including firmware, resident software, micro-code, etc.) or an embodiment combining software and hardware aspects all generally referred to herein as a "circuit", "module," or "system". Furthermore, the present invention may take the form of a computer program product on a computer-usable storage medium having computer-usable program code embodied in the medium. As used herein, the terms "software" or "firmware" are interchangeable and include any computer program stored in memory for execution by a processor, including RAM memory, ROM memory, EPROM memory, EEPROM memory, and non-volatile RAM (NVRAM) memory. The above memory types are exemplary only and are thus not limiting as to the types of memory usable for storage of a computer program.

Any suitable computer readable medium may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (R_AM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

Computer program code for carrying out operations of the present invention may be written in an object-oriented programming language such as Java7, Smalltalk or C++, or the like. However, the computer program code for carrying out operations of the present invention may also be written in conventional procedural programming languages, such as the "C" programming language, or a similar language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

## Claims

1. A method for operating a wind turbine during idling, the method comprising:
establishing two or more idling modes, the two or more idling modes including a first idling mode and a second idling mode, wherein the second idling mode comprises operating a wind rotor of the wind turbine at a higher rotational velocity than the first idling mode,
determining an idling mode from the two or more idling modes, based at least in part on one or more fixed preference parameters and/or a measured parameter, the determination being related to an aerodynamic damping criterion and to an off-grid power generation requirement criterion, and
selecting the idling mode resulting from the determination, when at least one of the criterions is fulfilled, and
operating the wind turbine in said idling mode.

2. The method of claim 1, further comprising generating electricity in the first idling mode and/or in the second idling mode, in particular in either an islanded operational mode or in a self-sustained operational mode.

3. The method of claim 1, wherein the first idling mode is a passive idling mode where the wind turbine does not produce electricity and the second idling mode involves generating electricity.

4. The method of claim 1 or 2, further comprising establishing three idling modes for the wind turbine, and determining the idling mode from the three idling modes, wherein the three idling modes comprise:
a passive idling mode,
the first idling mode, and
the second idling mode.

5. The method of any one of claims 1 to 4, further comprising transitioning between idling modes based at least in part on a change of the measured parameter, in particular transitioning from the second idling mode to the first idling mode or to a passive idling mode based on a threshold associated with the measured parameter.

6. The method of any one of claims 1 to 5, wherein the measured parameter comprises a structural loading on a component of the wind turbine.

7. The method of claim 6, wherein the structural loading is determined based at least in part on an acceleration data of a tower or nacelle of the wind turbine.

8. The method of any one of claims 1 to 7, wherein the one or more fixed preference parameters include a structural characteristic of the wind turbine, such that the fixed preference parameter sets a preference to operate the wind turbine in the first or the second idling mode based at least in part on said structural characteristic, in particular wherein the structural characteristic comprises a foundation type of the wind turbine.

9. The method any one of claims 1 to 8, wherein a jacket foundation is a fixed preference parameter for selecting the first idling mode.

10. The method of any one of claims 1 to 9, wherein a monopile foundation is a fixed preference parameter for selecting the second idling mode.

11. The method of any one of claims 1 to 10, wherein the step of determining the idling mode comprises fulfilling an off-grid power generation requirement criterion based on a capability or requirement of the wind turbine to operate in at least one of a self-sustained operational mode or an islanded operational mode.

12. The method of any one of claims 1 to 11, wherein: the determination of the idling mode comprises a lower aerodynamic damping and higher aerodynamic damping criterion, wherein the lower aerodynamic damping criterion is associated with the first idling mode and the higher aerodynamic damping criterion is associated with the second idling mode.

13. A control system of a wind turbine, configured to:
implement two or more idling modes, wherein the two or more idling modes include a first idling mode and a second idling mode, wherein the second idling mode comprises operating a wind rotor of the wind turbine at a higher rotational velocity than the first idling mode,
determine an idling mode from the two or more idling modes, based at least in part on one or more fixed preference parameters and/or a measured parameter, the determination related to an aerodynamic damping criterion and/or to an off-grid power generation requirement criterion, and
select the idling mode resulting from the determination, when at least one of the criterions is fulfilled, and operate the wind turbine in the selected idling mode.

14. A wind turbine comprising a rotor assembly comprising at least two blades configured to capture wind energy, a rotor hub to which the blades are attached, a generator mechanically linked to the rotor hub, configured to convert mechanical energy into electrical energy, a nacelle housing the generator, a tower supporting the nacelle and the rotor assembly, a foundation anchoring the wind turbine to ground or seabed,
wherein the wind turbine is **characterized in that** it comprises the control system of claim 13.

15. A method for upgrading an existing wind turbine in order to operate the wind turbine during idling, the method comprising providing and implementing a control system according to claim 13.
